# EUROPÄISCHE PATENTSCHRIFT

(11) **EP 3 274 603 B1**
(45) Veröffentlichungstag und Bekanntmachung des Hinweises auf die Patenterteilung: **08.05.2019**
(21) Anmeldenummer: 16719202.0
(22) Anmeldetag: 16.03.2016
(51) Int. Cl.: F16D 3/12

(54) **RIEMENSCHEIBENENTKOPPLER**
PULLEY DECOUPLER
DISPOSITIF DE DÉCOUPLAGE À POULIE À COURROIE

(30) Priorität: 27.03.2015 DE 102015205612
(43) Veröffentlichungstag der Anmeldung: 31.01.2018
(73) Patentinhaber: Schaeffler Technologies AG & Co. KG, 91074 Herzogenaurach (DE)
(72) Erfinder: HAUCK, Christian, 90518 Altdorf (DE)
(86) Internationale Anmeldenummer: PCT/DE2016/200143
(87) Internationale Veröffentlichungsnummer: WO 2016/155725

(56) Entgegenhaltungen:
- EP-A1- 2 511 557
- WO-A1-2009/031569
- WO-A1-2013/191240
- WO-A1-2014/056096
- WO-A1-2015/012053
- FR-A2- 2 382 615
- JP-A- 2008 180 261
- US-A1- 2013 324 335
- US-A1- 2015 260 265

## Beschreibung

Die Erfindung betrifft einen Entkoppler zum Drehantrieb eines Generators eines Nebenaggregate-Riementriebs einer Brennkraftmaschine, mit:
- einer vom Riemen drehangetriebenen Riemenscheibe,
- einer die Welle des Generators drehantreibenden Nabe, die radial innerhalb der Riemenscheibe angeordnet ist,
- zwei axial beabstandeten Lagerstellen, an denen die Riemenscheibe drehbar auf der Nabe gelagert ist,
- einer radial zwischen der Riemenscheibe und der Nabe angeordneten Reihenschaltung aus einer Schraubendrehfeder und einer Einwegkupplung, die in Antriebsdrehrichtung ein Überholen der Nabe gegenüber der Riemenscheibe zulässt,
- einem gegenüber der Riemenscheibe oder der Nabe drehfesten Federteller für das eine Ende der Schraubendrehfeder und einem gegenüber der Riemenscheibe und der Nabe drehbaren Federteller für das andere Ende der Schraubendrehfeder.

Die Federteller steigen jeweils bis zu einer Stufe axial rampenförmig an, und die an den Rampenstufen anliegenden Federenden weiten die Schraubendrehfeder unter Übertragung des Antriebsmoments radial auf. Dabei beaufschlagt das bei überholender Nabe in einer der Lagerstellen erzeugte Reibmoment den drehbaren Federteller in Drehrichtung des drehfesten Federtellers.

Derartige Entkoppler (Englisch: Decoupler) kompensieren bekanntlich Drehschwingungen und -ungleichförmigkeiten der Kurbelwelle, die über den Nebenaggregate-Riementrieb auf den Generator übertragen werden. Die Reihenschaltung aus der Einwegkupplung und der Schraubendrehfeder überträgt im geschlossenen Zustand der Einwegkupplung das Antriebsmoment des Riemens über die Riemenscheibe und die Nabe auf die Welle des Generators, wobei die Elastizität der Schraubendrehfeder die Drehungleichförmigkeiten glättet. Bei verzögert rotierender Riemenscheibe öffnet die Einwegkupplung, wobei - dann umgekehrt - kein nennenswertes Drehmoment von der Nabe auf die Riemenscheibe übertragen werden kann und die mit relativ großer Massenträgheit behaftete Generatorwelle die Riemenscheibe überholt.

Der Ort dieser entkoppelnden Wirkung kann bekanntlich auch direkt auf der Kurbelwelle sein, wobei dann die Schraubendrehfeder und die damit in Reihe geschaltete Einwegkupplung bei entsprechender Dimensionierung und Anpassung an den umgekehrten Antriebsmomentfluss Teil eines sogenannten Kurbelwellen-Entkopplers sind, der auf der Kurbelwelle positioniert ist und den gesamten Nebenaggregate-Riementrieb antreibt.

Ein gattungsgemäßer Generator-Entkoppler geht beispielsweise aus der EP 2 258 968 A1 hervor. Die Einwegkupplung ist ein Klemmkörperfreilauf, der bezüglich des Antriebsmomentflusses von der Riemenscheibe auf die Nabe stromabwärts, d.h. hinter der Schraubendrehfeder und folglich unmittelbar auf der Nabe angeordnet ist. Die drehbare Lagerung der Riemenscheibe erfolgt generatorseitig über ein Kugellager und gegenüberliegend zum einen über einen Gleitlagerring, in dem der drehbare Federteller gelagert ist, und zum anderen über ein weiteres Kugellager, das den drehbaren Federteller auf der Nabe lagert.

Obwohl die Einwegkupplung bei überholender Nabe geöffnet ist, kann das unvermeidliche Restreibmoment der Kupplung zu einer Relativverdrehung der beiden Federteller führen, wobei sich ein oder beide Enden der Schraubendrehfeder von den umfänglichen Rampenstufen der Federteller entfernen und an deren Rampen hochlaufen. Der dabei infolge der Rampengeometrie effektiv abnehmende Axialbauraum für die Schraubendrehfeder kann bewirken, dass die Schraubendrehfeder die beiden Federteller axial auseinander drückt und so den Entkoppler gleichsam axial sprengt. Eine ebenso unerwünschte Konsequenz ist die auffällige Akustik des Entkopplers, wenn ein oder beide Federenden wiederholt an den Rampen hochlaufen und nach jeder Umdrehung an den Rampenstufen zurück schnappen.

Diese Problematik des Rampenhochlaufs wird bei einem Entkoppler, wie er aus der US 8,047,920 B2 bekannt ist, durch einen Mechanismus beseitigt, der bei überholender Nabe die Relativverdrehung der beiden Federteller durch gegenseitige Anschläge verhindert. Ein solcher Mechanismus kann insbesondere dann erforderlich sein, wenn die Einwegkupplung - wie in dieser Druckschrift - ein Schlingband ist, dessen Restreibung im geöffneten Zustand naturgemäß so groß ist, dass der Rampenhochlauf forciert wird.

Der vorliegenden Erfindung liegt die Aufgabe zugrunde, einen Entkoppler der eingangs genannten Art so zu modifizieren, dass das unerwünschte Hochlaufen der Federenden an den Rampen der Federteller verhindert wird.

Die Lösung hierfür ergibt sich aus den Merkmalen des Anspruchs 1. Demnach soll die andere Lagerstelle einen gegenüber dem drehfesten Federteller drehfesten Teil haben, an dem der drehbare Federteller unter Erzeugung eines weiteren Reibmoments abgestützt ist, das bei überholender Nabe den drehbaren Federteller in Drehrichtung des drehfesten Federtellers beaufschlagt.

Somit wird der drehbare Federteller von zumindest zwei Lagerstellen aus mit Reibmomenten beaufschlagt, die im Überholbetrieb des Entkopplers gemeinsam und folglich sich verstärkend in die Drehrichtung des drehfesten Federtellers wirken. Der drehbare Federteller ist also erfindungsgemäß lediglich durch ausreichend hohe Reibmomente veranlasst, ohne Relativdrehzahl gegenüber dem drehfesten Federteller umzulaufen. Dies verringert in erheblichem Maß das eingangs erläuterte Risiko, dass bei überholender Nabe die Federenden an den Rampen der Federteller infolge deren Relativverdrehung hochlaufen. Das Risiko ist besonders gering, wenn die Einwegkupplung im geöffneten Zustand ein deutlich geringeres Restreibmoment als ein Schlingband hat und beispielsweise ein Klemmkörperfreilauf ist. In einer besonders bevorzugten Ausgestaltung soll die Einwegkupplung ein Klemmrollenfreilauf sein.

In Abhängigkeit der Reihenfolge von Schraubendrehfeder und Einwegkupplung innerhalb deren Reihenschaltung treten im Überholbetrieb des Entkopplers folgende Zustände auf:
- wenn (wie im eingangs zitierten Stand der Technik) die Einwegkupplung hinter der Schraubendrehfeder positioniert ist, dann befindet sich der drehbare Federteller über die beiden Lagerstellen in doppeltem Reibkontakt mit der überholten Riemenscheibe, die gegenüber dem drehfesten Federteller drehfest ist.
- wenn (dazu umgekehrt) die Einwegkupplung vor der Schraubendrehfeder positioniert ist, dann befindet sich der drehbare Federteller über die beiden Lagerstellen in doppeltem Reibkontakt mit der überholenden Nabe, die gegenüber dem drehfesten Federteller drehfest ist.

Weitere Merkmale der Erfindung ergeben sich aus der nachfolgenden Beschreibung und den Zeichnungen, in denen ein erfindungsgemäßer Entkoppler für den Generator eines Nebenaggregate-Riementriebs einer Brennkraftmaschine dargestellt ist. Es zeigen:
- Figur 1: den Entkoppler in perspektivischer Ansicht;
- Figur 2: den Entkoppler im Längsschnitt;
- Figur 3: den Entkoppler in perspektivischer Explosion;
- Figur 4: die Nabe des Entkopplers in perspektivischer Einzelansicht;
- Figur 5: den drehbaren Federteller des Entkopplers in perspektivischer Einzelansicht.

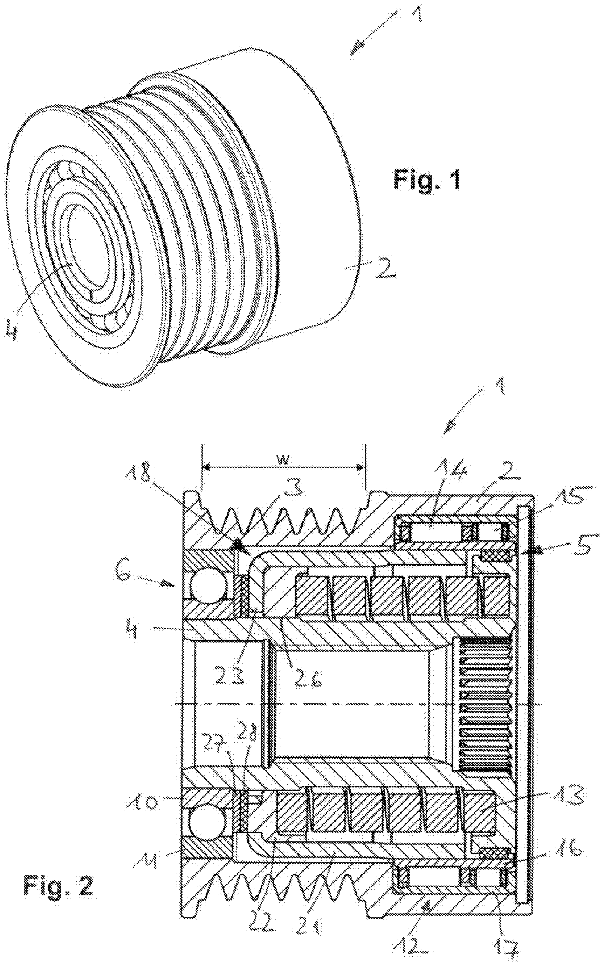

Der in den Figuren 1 bis 3 dargestellte Entkoppler 1 ist auf dem Generator eines Nebenaggregate-Riementriebs einer Brennkraftmaschine angeordnet. Der Entkoppler 1 umfasst eine drehangetriebene Riemenscheibe 2, die in dem in Figur 1 eingezeichneten axialen Bereich w mit einer profilierten Riemenspur 3 für den antreibenden Poly-V-Riemen versehen ist. Die radial innerhalb der Riemenscheibe 2 angeordnete Nabe 4 wird in bekannter Weise fest mit der Welle des Generators verschraubt. Die Drehlagerung der Riemenscheibe 2 auf der Nabe 4 erfolgt an zwei Lagerstellen 5 und 6 an den axialen Enden des Entkopplers 1. Die eine, in Figur 2 rechte Lagerstelle 5 befindet sich auf der generatorfernen Anschraubseite des Entkopplers 1 und ist durch einen Gleitlagerring 7 aus Kunststoff gebildet, der einen Gleitlagerabschnitt 8 der Nabe 4 umschließt. Die andere, in Figur 2 linke Lagerstelle 6 befindet sich auf der Generatorseite und ist durch ein Kugellager 9 gebildet, dessen Innenring 10 auf der Nabe 4 befestigt ist und dessen Außenring 11 in der Riemenscheibe 2 befestigt ist.

Die elastische Übertragung des Antriebsmoments von der Riemenscheibe 2 auf die Nabe 4 erfolgt über eine radial zwischen der Riemenscheibe 2 und der Nabe 4 verlaufende Reihenschaltung aus einer Einwegkupplung 12 und einer Schraubendrehfeder 13, die bezüglich des Antriebsmomentflusses stromabwärts der Einwegkupplung 12 angeordnet ist. Die Einwegkupplung 12 ist ein Klemmrollenfreilauf, der mit einer Klemmrollenreihe 14, einer axial dazu benachbarten Stützlagerreihe 15, einem im Bereich der Klemmrollenreihe 14 mit Klemmrampen versehenen Innenring 16 und einem Außenring 17 eine Baueinheit bildet. Diese erstreckt sich zugunsten eines möglichst geringen Umschlingungsdurchmessers des Riemens radial außerhalb der Schraubendrehfeder 13 und axial vollständig außerhalb des Bereichs w der Riemenspur 3, wobei der Freilaufaußenring 17 in einer zur Riemenspur 3 benachbarten Durchmessererweiterung der Riemenscheibe 2 eingepresst ist und der Freilaufinnenring 16 den Gleitlagerring 7 umschließt.

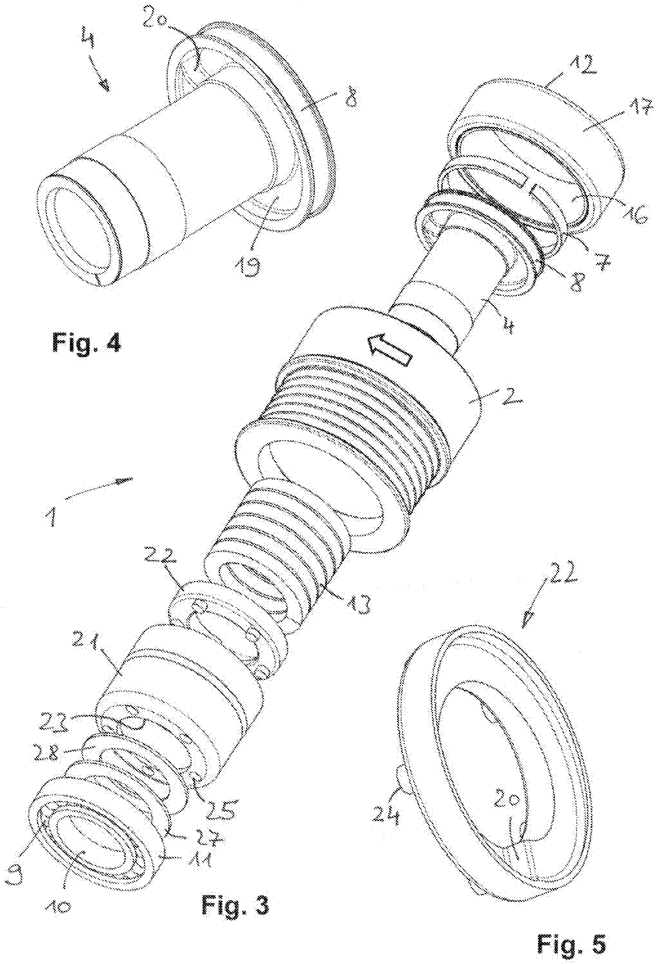

Die Schraubendrehfeder 13 ist mit schenkellosen Federenden zwischen einem Federteller 18, der gegenüber der Riemenscheibe 2 und der Nabe 4 drehbar ist, und einem Federteller 19, der gegenüber der Nabe 4 drehfest ist, eingespannt. Wie es in den Figuren 4 und 5 verdeutlicht ist, steigen beide Federteller 18, 19 axial rampenförmig an, so dass die an den Rampenstufen 20 stirnseitig anliegenden Federenden die Schraubendrehfeder 13 radial aufweiten, wenn diese das Antriebsmoment von der Riemenscheibe 2 auf die Nabe 4 überträgt.

Der drehfeste Federteller 19, an dem das eine Federende anliegt, ist einteilig an der Nabe 4 ausgebildet, und dessen Außenmantel bildet den Gleitlagerabschnitt 8. Der drehbare Federteller 18, an dem das andere Federende anliegt, ist zweiteilig und umfasst ein zylindrisches Blechformteil 21 und ein darin verdrehgesichert aufgenommenes Federanlageteil 22, an dem die Rampenstufe 20 angeformt ist. Das Blechformteil 21 ist an einem Ende im Freilaufinnenring 16 eingepresst und hat am anderen Ende einen radial einwärts verlaufenden Kragen 23 zur verdrehsichernden Abstützung des Federanlageteils 22. Die Verdrehsicherung erfolgt durch mehrere und vorliegend fünf axiale Vorsprünge 24 am Federanlageteil 22, die in dazu korrespondierende Öffnungen 25 im Kragen 23 eingreifen. Als Alternative können der Freilaufinnenring 16 und das Blechformteil 21 sowie auch das Federanlageteil 22 zu einem einteiligen und beispielsweise gesinterten Bauteil zusammengefasst sein.

Der drehbare Federteller 18 ist einerseits über den Freilaufinnenring 16 an der einen Lagerstelle 5 und andererseits über das Federanlageteil 22 an einer Lagerstelle 26 radial auf der Nabe 4 abgestützt und außerdem axial gegen das Kugellager 9 abgestützt. Die axiale Abstützung erfolgt mittels einer metallischen Anlaufscheibe 27 und einer dazu benachbarten Gleitlagerscheibe 28 aus Kunststoff, die zwischen dem Lagerinnenring 10 und dem Kragen 23 mit der axialen Vorspannkraft der Schraubendrehfeder 13 eingespannt sind. Somit bildet der Lagerinnenring 10 einen gegenüber dem drehfesten Federteller 19 weiteren drehfesten Teil, an dem der drehbare Federteller 18 abgestützt ist.

Der Riemen treibt die Riemenscheibe 2 des Entkopplers 1 in der in Figur 3 eingezeichneten Drehrichtung an. In dem Betriebszustand, in dem die Generatorwelle von der Nabe 4 angetrieben wird, ist der Klemmrollenfreilauf 12 geschlossen und überträgt das Antriebsmoment über den Freilaufinnenring 16, den drehbaren Federteller 18 und die Schraubendrehfeder 13 auf den drehfesten Federteller 19. Die Schraubendrehfeder 13 ermöglicht dabei Relativverdrehungen der beiden Federteller 18, 19 zueinander und somit Relativverdrehungen der Riemenscheibe 2 gegenüber der Generatorwelle. In einem anderen Betriebszustand mit negativer Drehzahldifferenz zwischen der (relativ langsam drehenden) Riemenscheibe 2 und der (relativ schnell drehenden) Generatorwelle ermöglicht der geöffnete Klemmrollenfreilauf 12, dass die Nabe 4 die Riemenscheibe 2 überholt. Eine dabei entstehende Relativverdrehung der beiden Federteller 18, 19 gegeneinander und der damit verbundene Rampenhochlauf der Federenden wird dadurch verhindert, dass die beiden Federteller 18, 19 mit derselben Drehzahl umlaufen. Diese Drehzahlsynchronisation erfolgt ausschließlich durch gleichgerichtete Reibmomente, die der drehbare Federteller 18 an den drei Lagerstellen 5, 6 und 26 von der (mit dem drehfesten Federteller 19 drehfest verbundenen) Nabe 4 abgreift. In Summe wird der drehbare Federteller 18 mit dem Reibmoment des radialen Gleitlagerrings 7, dem Reibmoment der axialen Gleitlagerscheibe 28 und dem Reibmoment der Lagerstelle 26 beaufschlagt, wobei dieses Summenmoment deutlich größer ist als das Restreibmoment des geöffneten Klemmrollenfreilaufs 12, das über den Freilaufinnenring 16 ebenfalls auf den drehbaren Federteller 18, jedoch mit entgegen gerichteter Drehrichtung wirkt.

### Bezugszeichenliste

- 1: Entkoppler
- 2: Riemenscheibe
- 3: Riemenspur
- 4: Nabe
- 5: Lagerstelle
- 6: Lagerstelle
- 7: Gleitlagerring
- 8: Gleitlagerabschnitt
- 9: Kugellager
- 10: Lagerinnenring
- 11: Lageraußenring
- 12: Einwegkupplung / Klemmrollenfreilauf
- 13: Schraubendrehfeder
- 14: Klemmrollenreihe
- 15: Stützlagerreihe
- 16: Freilaufinnenring
- 17: Freilaufaußenring
- 18: drehbarer Federteller
- 19: drehfester Federteller
- 20: Rampenstufe
- 21: Blechformteil
- 22: Federanlageteil
- 23: Kragen
- 24: Vorsprung
- 25: Öffnung
- 26: Lagerstelle
- 27: Anlaufscheibe
- 28: Gleitlagerscheibe

## Patentansprüche

1. Entkoppler (1) zum Drehantrieb eines Generators eines Nebenaggregate-Riementriebs einer Brennkraftmaschine, mit:
- einer vom Riemen drehangetriebenen Riemenscheibe (2),
- einer die Welle des Generators drehantreibenden Nabe (4), die radial innerhalb der Riemenscheibe (2) angeordnet ist,
- zwei axial beabstandeten Lagerstellen (5, 6), an denen die Riemenscheibe (2) drehbar auf der Nabe (4) gelagert ist,
- einer radial zwischen der Riemenscheibe (2) und der Nabe (4) angeordneten Reihenschaltung aus einer Schraubendrehfeder (13) und einer Einwegkupplung (12), die in Antriebsdrehrichtung ein Überholen der Nabe (4) gegenüber der Riemenscheibe (2) zulässt,
- einem gegenüber der Riemenscheibe (2) oder der Nabe (4) drehfesten Federteller (19) für das eine Ende der Schraubendrehfeder (13) und einem gegenüber der Riemenscheibe (2) und der Nabe (4) drehbaren Federteller (18) für das andere Ende der Schraubendrehfeder (13),
wobei die Federteller (18, 19) jeweils bis zu einer Stufe (20) axial rampenförmig ansteigen und die an den Rampenstufen (20) anliegenden Federenden die Schraubendrehfeder (13) unter Übertragung des Antriebsmoments radial aufweiten und wobei das bei überholender Nabe (4) in einer der Lagerstellen (5, 6) erzeugte Reibmoment den drehbaren Federteller (18) in Drehrichtung des drehfesten Federtellers (19) beaufschlagt, **dadurch gekennzeichnet, dass** die andere Lagerstelle (5, 6) einen gegenüber dem drehfesten Federteller (19) drehfesten Teil hat, an dem der drehbare Federteller (18) unter Erzeugung eines weiteren Reibmoments abgestützt ist, das bei überholender Nabe (4) den drehbaren Federteller (18) in Drehrichtung des drehfesten Federtellers (19) beaufschlagt.

2. Entkoppler (1) nach Anspruch 1, **dadurch gekennzeichnet, dass** die Einwegkupplung als Klemmrollenfreilauf (12) ausgebildet ist, der radial außerhalb der Schraubendrehfeder (13) angeordnet ist.

3. Entkoppler (1) nach Anspruch 2, **dadurch gekennzeichnet, dass** sich der Klemmrollenfreilauf (12) axial vollständig außerhalb der Riemenspur (3) in der Riemenscheibe (2) erstreckt.

4. Entkoppler (1) nach Anspruch 2 oder 3, **dadurch gekennzeichnet, dass** die eine Lagerstelle (5) durch einen Gleitlagerring (7) gebildet ist, der die Nabe (4) umschließt und von einem Innenring (16) des Klemmrollenfreilaufs (12) umschlossen ist.

5. Entkoppler (1) nach Anspruch 4, **dadurch gekennzeichnet, dass** der drehbare Federteller (18) ein zylindrisches Blechformteil (21) umfasst, das im Innenring (16) des Klemmrollenfreilaufs (12) befestigt ist.

6. Entkoppler (1) nach Anspruch 5, **dadurch gekennzeichnet, dass** der drehbare Federteller (18) ein im Blechformteil (21) aufgenommenes Federanlageteil (22) umfasst, an dem die Rampenstufe (20) angeformt ist und das an einem radial einwärts verlaufenden Kragen (23) des Blechformteils (21) gegen Verdrehen gesichert anliegt.

7. Entkoppler (1) nach einem der Ansprüche 2 bis 6, **dadurch gekennzeichnet, dass** die andere Lagerstelle (6) ein Kugellager (9) ist, dessen Innenring (10) auf der Nabe (4) befestigt ist und den drehbaren Federteller (18) axial abstützt.

8. Entkoppler (1) nach Anspruch 7, **dadurch gekennzeichnet, dass** der Innenring (10) des Kugellagers (9) den drehbaren Federteller (18) mittels einer metallischen Stützscheibe (27) und einer Gleitlagerscheibe (28) aus Kunststoff abstützt.

## Claims

1. Decoupler (1) for the rotary drive of a generator of an auxiliary unit belt drive of an internal combustion engine, having:
- a belt pulley (2) which is driven rotationally by the belt,
- a hub (4) which rotationally drives the shaft of the generator and is arranged radially within the belt pulley (2),
- two bearing points (5, 6) which are spaced apart axially and at which the belt pulley (2) is mounted rotatably on the hub (4),
- a series connection of a helical torsion spring (13) and a one-way clutch (12) which allows the hub (4) to overrun the belt pulley (2) in the drive rotational direction, which series connection is arranged radially between the belt pulley (2) and the hub (4),
- a spring collar (19) which cannot rotate with respect to the belt pulley (2) or the hub (4) for the one end of the helical torsion spring (13), and a spring collar (18) which can be rotated with respect to the belt pulley (2) and the hub (4) for the other end of the helical torsion spring (13),
the spring collars (18, 19) rising in an axially ramp-shaped manner in each case up to a stage (20), and the spring ends which bear against the ramp stages (20) widen the helical torsion spring (13) radially with the transmission of the drive torque, and the frictional torque which is generated at one of the bearing points (5, 6) in the case of an overrunning hub (4) loading the rotatable spring collar (18) in the rotational direction of the spring collar (19) which cannot rotate, **characterized in that** the other bearing point (5, 6) has a part which cannot rotate with respect to the spring collar (19) which cannot rotate, on which part the rotatable spring collar (18) is supported with the generation of a further frictional torque which, in the case of an overrunning hub (4), loads the rotatable spring collar (18) in the rotational direction of the spring collar (19) which cannot rotate.

2. Decoupler (1) according to Claim 1, **characterized in that** the one-way clutch is configured as a clamping roller freewheel (12) which is arranged radially outside the helical torsion spring (13).

3. Decoupler (1) according to Claim 2, **characterized in that** the clamping roller freewheel (12) extends axially completely outside the belt track (3) in the belt pulley (2).

4. Decoupler (1) according to Claim 2 or 3, **characterized in that** the one bearing point (5) is formed by way of a plain bearing ring (7) which encloses the hub (4) and is enclosed by an inner ring (16) of the clamping roller freewheel (12).

5. Decoupler (1) according to Claim 4, **characterized in that** the rotatable spring collar (18) comprises a cylindrical shaped sheet metal part (21) which is fastened in the inner ring (16) of the clamping roller freewheel (12).

6. Decoupler (1) according to Claim 5, **characterized in that** the rotatable spring collar (18) comprises a spring bearing part (22) which is received in the shaped sheet metal part (21), on which the ramp stage (20) is formed integrally, and which bears against a radially inwardly running collar (23) of the shaped sheet metal part (21) in a manner which is secured against rotation.

7. Decoupler (1) according to one of Claims 2 to 6, **characterized in that** the other bearing point (6) is a ball bearing (9), the inner ring (10) of which is fastened on the hub (4) and supports the rotatable spring collar (18) axially.

8. Decoupler (1) according to Claim 7, **characterized in that** the inner ring (10) of the ball bearing (9) supports the rotatable spring collar (18) by means of a metallic supporting disc (27) and a plain bearing disc (28) made from plastic.

## Revendications

1. Dispositif de découplage (1) servant à entraîner en rotation un générateur d'un entraînement par courroie de groupes auxiliaires d'un moteur à combustion interne, comprenant :
- une poulie à courroie (2) entraînée en rotation par la courroie,
- un moyeu (4) entraînant en rotation l'arbre du générateur, lequel moyeu est disposé radialement à l'intérieur de la poulie à courroie (2),
- deux points d'appui (5, 6) espacés axialement, au niveau desquels la poulie à courroie (2) est supportée de manière rotative sur le moyeu (4),
- un montage en série disposé radialement entre la poulie à courroie (2) et le moyeu (4) et constitué d'un ressort de torsion hélicoïdal (13) et d'un embrayage unidirectionnel (12) qui autorise, dans le sens de rotation d'entraînement, le moyeu (4) à tourner en roue libre par rapport à la poulie à courroie (2),
- une coupelle de ressort (19) solidaire en rotation par rapport à la poulie à courroie (2) ou au moyeu (4) pour l'une des extrémités du ressort de torsion hélicoïdal (13) et une coupelle de ressort (18) rotative par rapport à la poulie à courroie (2) et au moyeu (4) pour l'autre extrémité du ressort de torsion hélicoïdal (13),
les coupelles de ressort (18, 19) s'élevant respectivement axialement en forme de rampe jusqu'à un gradin (20), et les extrémités de ressort s'appuyant contre les gradins de rampe (20) élargissant radialement le ressort de torsion hélicoïdal (13) en transmettant le couple d'entraînement, et le couple de friction produit dans l'un des points d'appui (5, 6) en cas de moyeu (4) en roue libre sollicitant la coupelle de ressort (18) rotative dans le sens de rotation de la coupelle de ressort (19) solidaire en rotation, **caractérisé en ce que** l'autre point d'appui (5, 6) a une partie solidaire en rotation par rapport à la coupelle de ressort (19) solidaire en rotation, partie sur laquelle est supportée la coupelle de ressort rotative (18) avec production d'un autre couple de friction qui, en cas de moyeu (4) en roue libre, sollicite la coupelle de ressort (18) rotative dans le sens de rotation de la coupelle de ressort (19) solidaire en rotation.

2. Dispositif de découplage (1) selon la revendication 1, **caractérisé en ce que** l'embrayage unidirectionnel est réalisé sous forme de roue libre à rouleaux de serrage (12) qui est disposée radialement à l'extérieur du ressort de torsion hélicoïdal (13).

3. Dispositif de découplage (1) selon la revendication 2, **caractérisé en ce que** la roue libre à rouleaux de serrage (12) s'étend axialement complètement à l'extérieur de la voie de courroie (3) dans la poulie à courroie (2).

4. Dispositif de découplage (1) selon la revendication 2 ou 3, **caractérisé en ce que** l'un des points d'appui (5) est formé par une bague de palier lisse (7) qui entoure le moyeu (4) et est entourée par une bague intérieure (16) de la roue libre à rouleaux de serrage (12).

5. Dispositif de découplage (1) selon la revendication 4, **caractérisé en ce que** la coupelle de ressort (18) rotative comporte une pièce façonnée en tôle cylindrique (21) qui est fixée dans la bague intérieure (16) de la roue libre à rouleaux de serrage (12).

6. Dispositif de découplage (1) selon la revendication 5, **caractérisé en ce que** la coupelle de ressort rotative (18) comporte une partie d'appui de ressort (22) logée dans la pièce façonnée en tôle (21), partie d'appui de ressort sur laquelle le gradin de rampe (20) est formé et laquelle partie d'appui de ressort s'appuie de manière bloquée en rotation contre une collerette (23), s'étendant radialement vers l'intérieur, de la pièce façonnée en tôle (21).

7. Dispositif de découplage (1) selon l'une des revendications 2 à 6, **caractérisé en ce que** l'autre point d'appui (6) est un palier à billes (9) dont la bague intérieure (10) est fixée sur le moyeu (4) et supporte axialement la coupelle de ressort rotative (18).

8. Dispositif de découplage (1) selon la revendication 7, **caractérisé en ce que** la bague intérieure (10) du palier à billes (9) supporte la coupelle de ressort rotative (18) au moyen d'une rondelle de support métallique (27) et d'une rondelle de palier lisse (28) en matière synthétique.
